(19) Europäisches Patentamt
European Patent Office
Office européen des brevets

(11) **EP 2 706 790 B1**

(12) **EUROPEAN PATENT SPECIFICATION**

(45) Date of publication and mention
of the grant of the patent:
**03.06.2020  Bulletin 2020/23**

(51) Int Cl.:
*H04W 48/18 (2009.01)*  *H04W 76/16 (2018.01)*
*H04W 88/06 (2009.01)*  *H04W 84/12 (2009.01)*

(21) Application number: **13181720.7**

(22) Date of filing: **26.08.2013**

(54) **NETWORK SELECTION AND TRAFFIC OFFLOADING MODULE**

Netzwerkauswahl und Traffic-Entlastungsmodul

Sélection de réseau et module de déchargement de trafic

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.08.2012  IL 22166712**

(43) Date of publication of application:
**12.03.2014  Bulletin 2014/11**

(73) Proprietor: **Deutsche Telekom AG**
**53113 Bonn (DE)**

(72) Inventors:
• **Mimran, Dudu**
  **6451613 Tel-Aviv (IL)**
• **Elovici, Yuval**
  **79864 Moshav Arugot (IL)**
• **Shapira, Bracha**
  **84728 Beer Sheva (IL)**
• **Bar, Ariel**
  **7740914 Ashdod (IL)**
• **Peylo, Christoph**
  **49401 Damme (DE)**

(74) Representative: **Schollweck, Susanne**
**ZSP Patentanwälte PartG mbB**
**Hansastraße 32**
**80686 München (DE)**

(56) References cited:
**EP-A2- 2 461 631**      **WO-A1-2011/100269**
**WO-A1-2011/123841**   **WO-A2-2007/078663**
**WO-A2-2010/141443**   **US-A1- 2005 185 653**

## Description

### Field of the Invention

The present invention relates to the field of mobile network selection. More particularly, the present invention relates to a system for network selection and traffic offloading for Android mobile devices.

### Background of the Invention

Analysis of current and future trends in modern mobile devices, applications and their network requirements raise several observations: The growth rate of mobile data traffic is expected to be over 100% per year in the next five years; The battery life of modern mobile devices is becoming shorter due to increasing usage by numerous applications and interfaces; New application and features require more throughput while different application types require different measures from the QoS (Quality of Service), e.g. Skype performs better when the delay of the network is low. Smart, automated and seamless network switching between heterogonous wireless networks may address these issues. Providing an "ABC" (Always Best Connected) solution for mobile devices requires addressing two important issues: the network switching process (i.e.: how to switch from one network instance to another?) and the network selection process (i.e.: how to decide which networks is better?).

"MultiNets" presented in "S. M. Shahriar Nirjon, et al., MultiNets: Policy Oriented Real-Time Switching of Wireless Interfaces on Mobile Devices" is one of the few solutions that provides satisfactory seamless network switching between heterogonous wireless networks without modifying network protocols or relying on special network architecture. MultiNets switching mechanism includes manipulating the routing table and gradual four-phased switching protocols between networks in order to minimize the number of interrupted sessions.

Network selection is performed according to a list of features, as at any decision time point, each available network is evaluated by these features. In most cases the features are derived from the network QoS, when bandwidth, delay, jitter and PER (packet error rate) are the most popular ones. MultiNets considers only the bandwidth feature from this list, but contributes two very important ones - battery consumption and offloading.

The network selection algorithms in MultiNets may be implemented directly by threshold based/heuristic policies. K. Pahlavan, et al., "Handoff in hybrid mobile data networks", IEEE Personal Communications 7 (2) 34-47, 2000 also discloses threshold based methods for selecting WiFi APs with maximum RSS. The limitations of these approaches are on their flexibility to define new policies easily. In the recent years, several more flexible methods and algorithms have been proposed for the network selection task including linear utility functions, Markov decision process, various Multiple Attributes Decision Making optimization techniques: SAW, MEW, TOPSIS, GRA, Yager's Maxmin, ELECTRE, different weighting schemes and Fuzzy Logic. All these methods separate the policy from the algorithm, as policies are represented by a vector of weights indicating the importance level of each network feature, or by a pair-wise comparison between each feature. However, these methods were not evaluated with gradual network switching protocols or with respect to battery saving feature.

Document WO 2011/123841 A1 discloses techniques for selecting radios and mapping applications to radios on a wireless device. The wireless network may have at least one application that is active and a plurality of radios that are available for use. In one design, the wireless device determines requirements of the at least one application, which may be related to throughput, latency, jitter, etc. The wireless device selects at least one radio among the plurality of radios based on the requirements of the at least one application and possibly other factors.

It is therefore a purpose of the present invention to provide flexible mobile network selection policies for various scenarios.

It is a further purpose of the present invention to provide a gradual mobile network switching protocol.

It is a further purpose of the present invention to provide the possibility of using two mobile network interfaces simultaneously .

Further purposes and advantages of this invention will appear as the description proceeds.

### Summary of the Invention

The invention is defined by the independent claims 1 and 11.

In a first aspect, the invention provides a network selection and offloading system for mobile devices as defined in claim 1.

The network switching engine may comprise:

a Connectivity Manager, adapted to implement the network switching and route between the available network interfaces; and

a Virtual IP Manager, adapted to allow the system to be connected to two different network interfaces simultaneously and to dynamically distribute the sessions between them .

The monitoring engine may comprise:

a Network Monitor, adapted to monitor which networks are available;
a Network QoS Estimator, adapted to estimate the QoS measures of a network; and
a Device Bytes Monitor, adapted to monitor the amount of received and sent bytes, the amount of active sessions and capacity of the battery.

The network selection (NS) decision model may comprise:

a Policy Repository, adapted to contain all network selection policies;
a Core Decision Protocol unit, adapted for network ranking and selection; and
a Supporting Models unit, adapted to provide global services for the different core decision protocols.

The network selection and traffic offloading (NeSTO) manager may comprise:

a Policy Selector, adapted to assign the required policy; and
a Switching Controller, adapted to activate all required processes for network selection.

The system may evaluate several WiFi networks and proceeds to choose the most suitable one, according to a predetermined policy for each running mobile application.
The system may evaluate several cellular networks and proceeds to choose the most suitable one, according to a predetermined policy for each running mobile application.
The system may be connected to both cellular and WiFi networks simultaneously while selecting the best network according to a predetermined policy for each running mobile application.
The system may switch to singular or dual network connection, according to a predetermined policy for each running mobile application.
The system may choose a mobile network with consideration to the load on the cellular network.
In a second aspect, the invention is a wireless mobile device modified by addition of the system of the first aspect to enable all of the following:

a. connection to one cellular network.
b. connection to one WiFi network.
c. simultaneous connection to one cellular network and one WiFi network.

The mobile device is an Android based device.
The invention is a network selection and offloading system for android based mobile devices shown herein as "Nesto". Nesto chooses the best connectivity solution between available heterogeneous wireless networks, by network switching. The framework of the invention supports several configurable policies and addresses the following requirements: battery energy saving, available bandwidth maximization, an offloading strategy for cellular operators and granting best available network QoS to current running applications (e.g. minimizing delay and jitter for voip applications). Nesto is designed to support two primary connectivity modes: a traditional single connectivity mode, and a full dual mode, where, both the cellular and ad-hoc WiFi networks are used simultaneously. The full dual mode allows extension of the always best connected definition from the device level to the application level, i.e.: selecting the best network for each application type. The architecture of Nesto and the different network selection optimization models are described herein below. The solution is evaluated with simulated data and with real network traffic traces. Preliminary results indicate that: (1) energy efficient policies rely on the single connectivity operation mode, but they can be controlled to improve other networking QoS measures with minimum energy overhead, (2) using the full dual operation mode improves the overall networking performances of the device, (3) the full dual operation mode enables an efficient always best connected solution at the application level, optimizing the relevant measures for each application type.
The present invention provides a novel system for network selection and traffic offloading between heterogeneous wireless networks in mobile devices. A key feature in the system is supporting *Full Dual Mode* connectivity, where both cellular and WiFi networks are used simultaneously while routing network sessions between them. This mode enables extension of the definition of ABC from the device level to the application level, i.e. selecting the best network for each running application. The network selection policies in the system contain a rich set of network features enabling to support a wide range of scenarios in a flexible way. Finally, network switches are performed gradually in order to minimize the number of interrupted sessions.

Results of the evaluation experiments conducted with a simulation tool and real world network traffic traces show that the single network mode remains effective after including the offloading and energy saving features while using a gradual network switching protocols for minimizing the number of interrupted sessions. Furthermore, it is possible to define efficient hybrid policies such as a real time application policy with minimum energy consumption overhead.

In addition, *Full Dual Mode* can improve the overall bandwidth performances of the device in different scenarios. Lastly, the *Full Dual Mode* enables efficient always best connected solution at the application level, optimizing the relevant measures for each application type.

All the above and other characteristics and advantages of the invention will be further understood through the following illustrative and non-limitative description of embodiments thereof, with reference to the appended drawings.

## Brief Description of the Drawings

- Fig. 1 schematically describes the high level architecture design of Nesto;
- Fig. 2 schematically describes different mobile network connection states;
- Fig. 3 shows an example of Single Network Mode results;
- Fig. 4 shows an example of Energy Efficient Policies results; and
- Fig. 5 shows an example of Full Dual Mode for maximum bandwidth results.

## Detailed Description of the Invention

The present invention introduces "Nesto" - a network selection and traffic offloading system for Android based mobile devices. Nesto is designed to provide a context aware "always best connected" (ABC) solution, selecting the best available network each time. Nesto supports two primary connectivity modes: a traditional single connectivity mode where the device is fully connected to either the cellular network or an ad-hoc WiFi network, and a *Full Dual Mode,* where both cellular and WiFi networks are used simultaneously while routing network sessions between them. The *Full Dual Mode* extends the definition of ABC from the device level to the application level, i.e. selecting the best network for each running application.

A fundamental difference between the present invention and prior art is the *Full Dual Mode,* where the device is fully connected to both cellular and ad-hoc WiFi networks, i.e. new sessions can be established via both of them. The switching protocols of the present invention continue MultiNets' approach and extend it to supports several new scenarios: switching between networks of the same type (e.g.: switching from one WiFi to another); switching from a single network mode to *Full Dual Mode* and vice versa; and switching between networks while in *Full Dual Mode* (i.e. replacing the current WiFi).

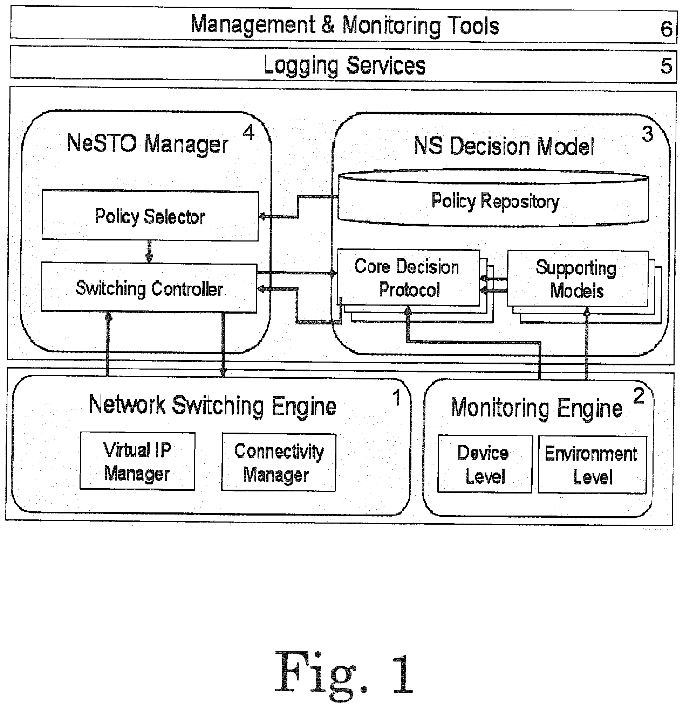

The high level architecture design of Nesto is illustrated in Fig. 1, in which the arrows on the block diagram illustrate the information flow. The "Network Switching Engine" (1) comprises the *Connectivity Manager* - implementing the entire network switching and routing tasks between the available network interfaces, and the *Virtual IP Manager* - providing the capability for the device to be connected to two different network interfaces simultaneously and to dynamically distribute the sessions between them. The "Monitoring Engine" (2) comprises components for monitoring both the features of the available networks (e.g.: RSS (Received Signal Strength), delay, PER, etc) and the current device measures (e.g. network traffic statistics and battery consumption level). The "NS Decision Model" (3) comprises the *Policy Repository* - containing all network selection policies in Nesto; the *Core Decision Protocols* - a set of algorithms for network ranking and selection, activated with respect to the current policy; and the *Supporting Models* - a group of generic models providing important global services for the different core decision protocols (e.g.: energy consumption prediction models). The "NeSTO Manager" (4) comprises the *Policy Selector* - responsible for assigning the current policy; and the *Switching Controller* - the main control unit in Nesto, responsible to activate all required processes for the network selection task. The "Logging Services" (5) comprises the documentation of all important events and decisions during the system operation. The "Management & Monitoring Tools" (6) comprise the supporting tools for controlling the different parameters of Nesto operation and retrieving the current statistics.

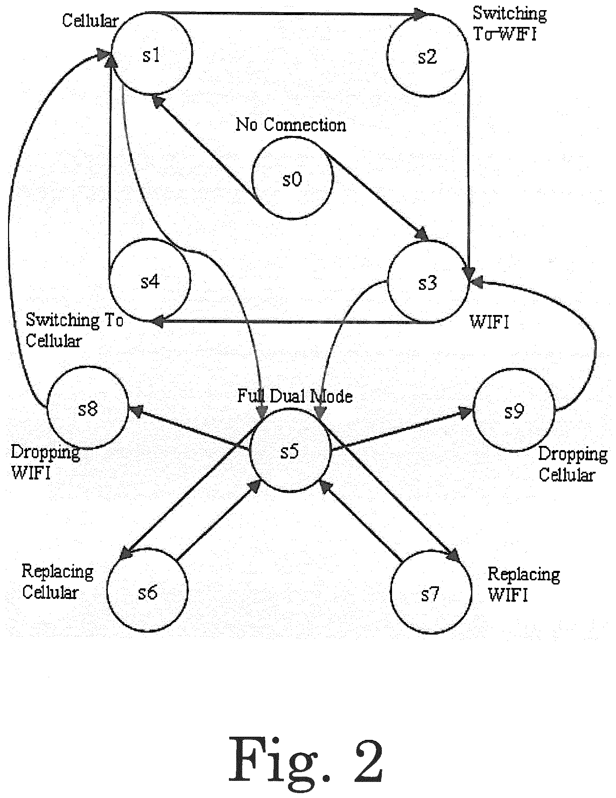

One of the main logical components is the *Connectivity Manager,* providing maximal seamless network switching between Cellular and WiFi interfaces. The basic idea is to perform a gradual network switching protocol in order that older sessions which started with the previous network interface will end normally. Nesto continues this approach and extends it to supports the following new scenarios: switching between networks of the same type e.g. switching from one WiFi to another; switching from a single network mode to *Full Dual Mode* and vice versa; and switching between networks while in *Full Dual Mode.* The Connectivity Manger uses a state machine to control and track down the progress of the different switching processes. The different states and most important state transitions are presented in Fig. 2.

The *No* Connectivity state ($S_0$) is an initial state where the device isn't connected to any network. The *Cellular* and *WiFi* states ($S_1$ and $S_3$ respectively) indicate that the device is connected to a single network interface. The *Switching To WiFi* and *Switching To Cellular* states ($S_2$ and $S_4$ respectively) are symmetric temporary states which indicate that the device is about to tear down the old network interface and completely move to the new one. In these states both interfaces are active, but new sessions are established only via the new network interface. Nesto enables switching between networks with the same type by performing a double network switch e.g. switching from one WiFi to another includes first switching from the current WiFi to cellular, and an additional network switch from cellular to the new WiFi. The *Full Dual Mode* ($S_5$) indicates that two network interfaces are fully active, as new sessions can be established via both cellular and WiFi according to the routing rules and the Virtual IP Manger. During the *Full Dual Mode* operation a network switch still may be required to replace the current WiFi or cellular network, these processes are handled by moving to the temporary states *Replacing WiFi* and *Replacing Cellular* ($S_7$ and $S_6$ respectively). In these states new network sessions are established solely by the opposite network interface type that should be replaced, but old sessions continue via the original network which established them as both networks are still active. The last two states in the state machine are *Dropping WiFi* and *Dropping Cellular* ($S_8$ and $S_9$ respectively). These are also temporary states for returning from *Full Dual Mode* back to a single network operation mode. New network sessions are established via the network which continues to operate, but old sessions continue with the network which established them. Table I summarizes all the network switching processes in Nesto. All these processes are performed gradually, as unnecessary network are removed.

Table I - Switching Protocols

| ID | Name | Protocol |
|---|---|---|
| 1. | Connect To Cellular | Full transition path: $S_0 \rightarrow S_1$:<br>• Establish new cellular interface, route all sessions via cellular.<br>• Move to $S_1$. |
| 2. | Connect To WiFi | Full transition path: $S_0 \rightarrow S_3$:<br>• Establish new WiFi interface, route all sessions via WiFi.<br>• Move to $S_3$ |
| 3. | Switch From Cellular to WiFi | Full transition path: $S_1 \rightarrow S_2 \rightarrow S_3$:<br>• Move to $S_2$.<br>• Establish new WiFi interface.<br>• Route new sessions to start via WiFi.<br>• Route old sessions to continue with the old cellular network.<br>• Wait time out (or until all old sessions via cellular are done).<br>• Tear down old cellular interface.<br>• Route all sessions via WiFi.<br>• Move to $S_3$. |
| 4. | Switch From WiFi to Cellular | Full transition path: $S_3 \rightarrow S_4 \rightarrow S_1$:<br>A symmetric process to *Switch From Cellular to WiFi*. |
| 5. | Replace WiFi (single) | Full transition path: $S_3 \rightarrow S_4 \rightarrow S_1 \rightarrow S_2 \rightarrow S_3$:<br>• Perform a full network switch from WiFi to cellular (process id 4 in this table).<br>• Perform a full network switch from cellular to WiFi (process id 3 in this table). |
| 6. | Replace Cellular (single) | Full transition path: $S_1 \rightarrow S_2 \rightarrow S_3 \rightarrow S_4 \rightarrow S_1$:<br>A symmetric process to *Replace WiFi (single)*. |
| 7. | Start Full Dual Mode | Full transition path: $S_1 \rightarrow S_5$ OR $S_3 \rightarrow S_5$.<br>• Establish the relevant network interface (WiFi or cellular respectively)<br>• Continue old sessions via the old network interface.<br>• Route new sessions according to the routing rules.<br>• Move to $S_5$. |

(continued)

| ID | Name | Protocol |
|---|---|---|
| 8. | Replace WiFi (Full Dual Mode) | Full transition path: $S_5 \rightarrow S_7 \rightarrow S_5$:<br>• Move to $S_7$.<br>• Maintain old sessions by the interface which initialized them.<br>• Route new sessions to start via cellular.<br>• Wait time out (or until all old sessions via WiFi are done).<br>• Tear down old WiFi interface.<br>• Establish new WiFi interface.<br>• Return to route sessions according to the routing rules.<br>• Move to $S_5$. |
| 9. | Replace Cellular (Full *Dual* Mode). | Full transition path: $S_5 \rightarrow S_6 \rightarrow S_5$:<br>A symmetric process to *Replace WiFi (Full Dual Mode)*. |
| 10. | Remove WiFi | Full transition path: $S_5 \rightarrow S_8 \rightarrow S_1$<br>• Move to $S_8$.<br>• Maintain old sessions by the interface which initialized them.<br>• Route new sessions to start via cellular.<br>• Wait time out (or until all old sessions via WiFi are done).<br>• Tear down current WiFi interface.<br>• Move to $S_1$.<br>• Return to single network mode. |
| 11. | Remove Cellular | Full transition path: $S_5 \rightarrow S_9 \rightarrow S_3$ A symmetric process to *Remove Cellular (and return to single mode)*. |

Another main logical component is the *Monitoring Engine.* This component is responsible for collecting both the network and device features for the network selection task. The following monitors are implemented: i) Network Monitor - monitors which networks are available, their characteristics (network name and type) and their received signal strength (RSS). ii) Network Estimator - once connected to a certain network, some of its QoS measures (delay, jitter, and PER) are estimated statistically by sending a series of ping messages to a designated server and retrieving their echoes. iii) Device Monitor - monitors the amount of received and sent bytes for each network instance, the amount of active sessions in each network instance and the current capacity of the battery.

Another main logical component is the *Policy Repository.* Policies in Nesto act as guideline elements for selecting the best available network at a given scenario. The Policy Repository uses "N-sized" weighted and normalized vector $(w_1, w_2, ..., wn)$ indicating the relative importance of each feature that is relevant for the network selection process. In Nesto all policies are defined with respect to the following six features: *Offloading, Power Saving, Bandwidth, Delay, Jitter* and *PER* (packet error rate). Table II illustrates an example, defining ten different policies: *OFF* - a pure offloading policy; *ES* - a pure energy saving policy; *MaxBand* - maximum bandwidth policy; *FTP* - policy for intensive file downloading/sharing applications (e.g.: browsers, FTP clients, Google Play Store, etc.) which tries to maximize bandwidth and minimize PER; *Stream* - policy for non live streaming applications (e.g.: YouTube), which at first tries to minimize the jitter for a smooth operation and in addition tries to maximize the bandwidth and minimize the delay; *RT* - policy for live real time applications (e.g.: Skype), tries to minimize both delay and jitter. *Back* - a policy for a background application which tries to optimize all available features; *FTP_O, Stream_O* and *RT_O* refine the original policies respectively by taking into consideration the offloading property. The flexible representation of the policies by a vector of weights enables an unlimited number of policies to be defined, supporting various scenarios. Using this modular policy representation enables various policies to be configured for different scenario, as well as hybrid ones (e.g.: a mixed real time/energy saving policy).

### Table II – Policies Example.

| Feature Policy | Offloading | Bandwidth | Power Saving | Delay | Jitter | PER |
|---|---|---|---|---|---|---|
| OFF | 0.9 | 0.1 | | | | |
| ES | | | 1.0 | | | |
| MaxBand | | 1.0 | | | | |
| FTP | | 0.66 | | | | 0.34 |
| FTP_O | 0.1 | 0.6 | | | | 0.3 |
| Stream | | 0.2 | | 0.25 | 0.55 | |
| Stream_O | 0.1 | 0.2 | | 0.2 | 0.5 | |
| RT | | | | 0.5 | 0.5 | |
| RT_O | 0.1 | | | 0.45 | 0.45 | |
| Back | 0.25 | 0.15 | 0.15 | 0.15 | 0.15 | 0.15 |

Another main logical component is the Core Decision Protocols. The core decision protocol (CDP) is an implementation of a network selection/traffic offloading decision algorithm. The output of this algorithm is a recommendation for the best available network based on the networks' feature values and a policy from the policy repository. With the SAW algorithm (W. Zhang, "Handover Decision Using Fuzzy MADM in Heterogeneous Networks," in Proc. of IEEE WCNC'04, Atlanta, GA, March 2004) which gives a rating score $R_j$ for each available network as presented in eq. 1, where $w_i$ represents the weight of feature $i$ in the current policy and $v_{ji}$ represents the normalized value of this feature in network $j$.

$$R_j = \sum_{i=0}^{n} w_i v_{ji} \qquad (1)$$

The values of delay jitter and PER are derived directly from the monitoring engine described in previous paragraphs. The value of the bandwidth feature is estimated by the RSS and the network type using the bandwidth functions. The value of the offloading feature is derived directly from the network type, as WiFi and cellular networks receive rating scores of 1 and 0 respectively. The value of the power saving energy feature is based on the energy model described in accordance with the data rate *(DR)* - the total amount of received and sent bytes per second): For cellular networks, if the *DR* is below threshold $\alpha$ (indicating that the device is not in a busy mode) then the value is set to 1, otherwise the value is set to 0; For WiFi networks, if the *DR* is below threshold $\beta$ for a continuous time of $\lambda$ seconds (indicating that the device is in idle mode) then the value is set to 0, otherwise the value is set to 1. To be consistent with the previous work, $\alpha$ and $\beta$ are set to 1 KB and $\lambda$ to 60 seconds. This energy efficient recommendation is based on the energy consumption analyses described in previous works which indicate that the energy consumption cost per mega is substantially higher in cellular than WiFi, however the energy consumption cost to maintain a WiFi interface per second is higher than in cellular.

Since there are many alternatives for implementing these algorithms, CDP is defined as an abstract entity, from which all concrete implementations are derived. The common behavior of any CDP includes the following activities: (1) Fetching the current network/device features from the Monitoring Engine; (2) Preprocessing the features' values (e.g.: normalization); (3) Assigning a rating score for each available network according to the features' values and context; (4) Generating the final recommendation for the best available network. The first activity is common to all CDPs, while the last three are unique (each concrete CDP must implement them).

Another main logical component is the *Switching Controller.* This component serves as general controller and coordinator for all the components in Nesto. The Switching Controller has three operation modes: a *Single Network Mode*, a *Full Dual Mode for maximizing bandwidth* and a *Full Dual Mode for maximizing session level QoS*. In all operation modes it is possible to switch from one operation mode to another at any time, and they share the following principles: The Switching Controller is activated at a certain frequency (e.g.: every 5 seconds). In each activation of the Switching Controller a network switch may occur only if the Connectivity Manager is in a stable state ($S_0$, $S_1$, $S_3$ or $S_5$ of Fig. 2), meaning that an in-process network state isn't interrupted by a switch to another state.

In the *Single Network Mode* only one network and one policy are active at a certain point of time. The goal is to select the best network according to the current policy. Each activation of the Switching Controller in this mode includes the following steps:

- Fetching the available networks and their features from the Monitoring Engine.
- Applying the CDP with current active policy and networks' features.
- Retrieving from the CDP result the best available network id and its rating score $<best\_network_{ID}, best\_network_{score}>$.
- Retrieving from the CDP result the current network rating score $current\text{-}network_{score}$.
- If the difference between the $best\_network_{score}$ and the $current\_network_{score}$ is above a threshold $\eta$, and the $best\_network_{score}$ is absolutely over a threshold $\zeta$, then the Switching Controller invokes the Connectivity Manager to start the process of network switching to $best\_network_{ID}$.

In the *Full Dual Mode for maximizing bandwidth,* Nesto works with two networks simultaneously in order to maximize the available bandwidth, but with respect to the current active policy from the policy repository. The idea behind this operation mode is to divide the network selection problem from the previous paragraph into two problems: selecting the best WiFi network and selecting the best cellular network. Each activation of the Switching Controller includes the following steps:

- Select the best WiFi network as in the *Single Network Mode,* but limit the selection alternatives to the available WiFi networks.
- If the previous step required a WiFi network switch - stop this activation and complete the switch.
- Otherwise, select the best cellular network as in the *Single Network Mode,* but limit the selection alternatives to the available cellular networks.

The goal of *Full Dual Mode for maximizing session level QoS* is to select the best available network for each running application. This mode includes two phases: First, a network selection process is applied to maximize the utility of two different application based policies simultaneously (one of these policies is considered to have higher priority than the other). Second, all other applications are routed to one of the selected networks according to their rating. The network selection in the first phase contains the following steps:

- Select the best network for the higher priority application policy as in the *Single Network Mode.*
- Select the best network for the other policy as in the *Single Network Mode,* when the valid networks are limited to the network which was assigned to the higher priority policy in the previous step, or any other network with different type from it.

For example, if the primary policy is a FTP application while the other policy is RT application, then first the network for the FTP application is selected from all available networks. If, for the FTP application, the best network is a WiFi network then the network selection for the RT application is limited to that WiFi network or any cellular networks. This limitation is the reason for prioritizing between the two application based policies.

The invention may support simultaneous connection to more than one WiFi networks (or more than one cellular networks) by integrating the present module into a device (with hardware modifications) comprising several WiFi/cellular modems.

## Examples

Several examples of simulation based results of the suggested system are presented in the following. The simulation environment was implemented on top of the network simulator ns-3. The simulation uses real world network traffic traces for evaluating the network selection decisions.

The simulation environment was configured as follows: At simulation run time there are four available networks to select from (two cellular, and two WiFi). The networks' QoS features evolve during the simulation according to a Markov chain. The values of the network features are configured as follows: the RSS ranges from -90 dBm to -50 dBm with 2 dBm steps. The RSS is converted to bandwidth, the delay ranges from 1ms to 100ms with 5ms steps, the jitter ranges from 1ms to 20ms with 0.5ms steps and the packet error rate ranges from $10^{-5}$ to $2\times10^{-4}$ with $2\times10^{-5}$ steps. Energy consumption is evaluated according the energy models.

The network traffic usage statistics (amount of data sent/received, number of active sessions, etc') for the simulation is interpolated from real world traffic traces. The traffic traces were recorded from personal Android devices of six volunteer users. The traffic traces lengths are from 2 weeks up to 3 months. All simulation increments in this example present averaged results on these traces.

Example 1

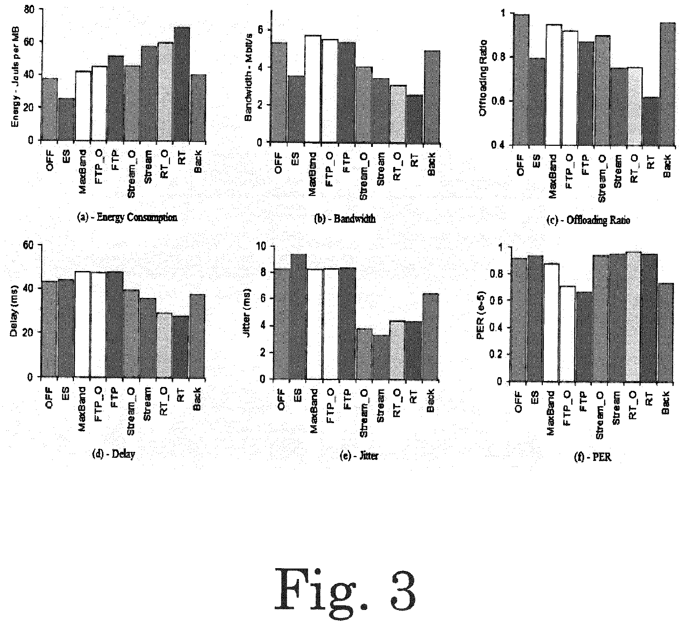

In this example the 10 policies (from the Policy Repository) were evaluated while using the *Single Network Mode*. The primary measures for each policy are presented in Fig. 3. The energy saving policy (ES) provides the lowest energy consumption from all other policies - 25.14 joules for 1 MB of total data usage. Applying this policy provides between 37.7% and 63.7% decrease in the total energy consumption, however there is a tradeoff in other network QoS e.g. high jitter. All policies which put high emphasis on the bandwidth feature provide over 4 Mbit/s of bandwidth, as the maximum bandwidth policy (MaxBand) provided the best bandwidth of 5.7 Mbit/s. Policies with high weights on the offloading or bandwidth features provide high offloading ratio (over 80%). The bandwidth features effect the network selection towards preferring WiFi networks over cellular, and as a result offloading ratio increases as well. The real time application based policies (RT, RT_O) were able to minimize the overall delay to the level of 28/29ms, providing up to 42% improvement from other policies. Similar performances with policies which try to minimize the jitter and packet error rate features providing 64.2% and 31.8% improvements respectively. When the original application based policies (FTP, RT and Stream) were modified and added weights to the offloading ratio, the offloading ratio was improved, with a small decrease to the "natural" QoS measures of them. From these results it is possible to conclude that it is feasible to include the offloading and energy saving features as any other policy scheme, and in addition it was observed that gradual network switching does not damage the network selection performances, as each policy succeeds to optimize its relevant features.

Example 2

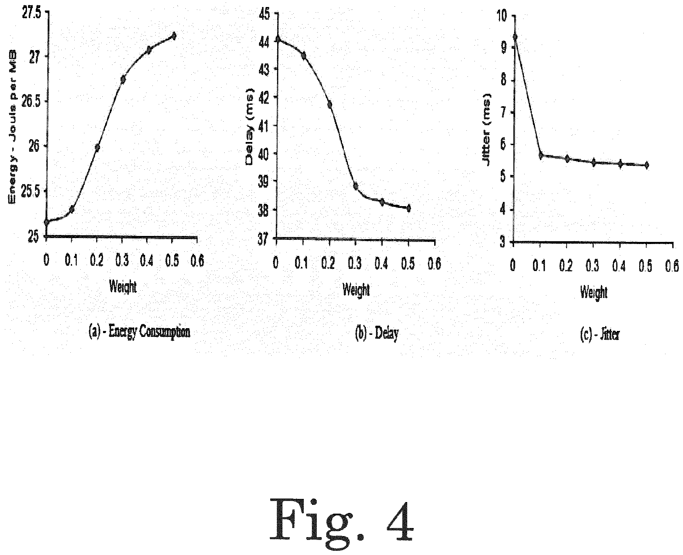

As described in the previous example, the energy saving was able to improve the energy consummation significantly compared to other policies, however the overall network QoS measures were insufficient. In this example, the original ES policy was modified to balance between energy saving and the real time QoS measures delay and jitter. In the new ES policy a control parameter w indicating the importance level of the RT QoS measures was added. The modified policy assigns the jitter and delay weight to $w/2$ each, while the energy saving weight is set *1-w*. With the *Single Network Mode* simulation running again with different w values ranging from 0 to 0.5, the performance results are presented in Fig. 4. As it can be observed, larger *w* values increase energy consumption, while improving the delay and jitter. Based on these results the optimal value of *w* is 0.3, as larger *w* values do not improve the delay and jitter significantly. With w set to 0.3 we were able to improve the delay and jitter by 12% and 41.5% respectively, with only 6.3% overhead to the energy cost. This policy along with the application/offloading oriented policies from the previous example illustrates how it is possible to create hybrid policies dynamically.

Example 3

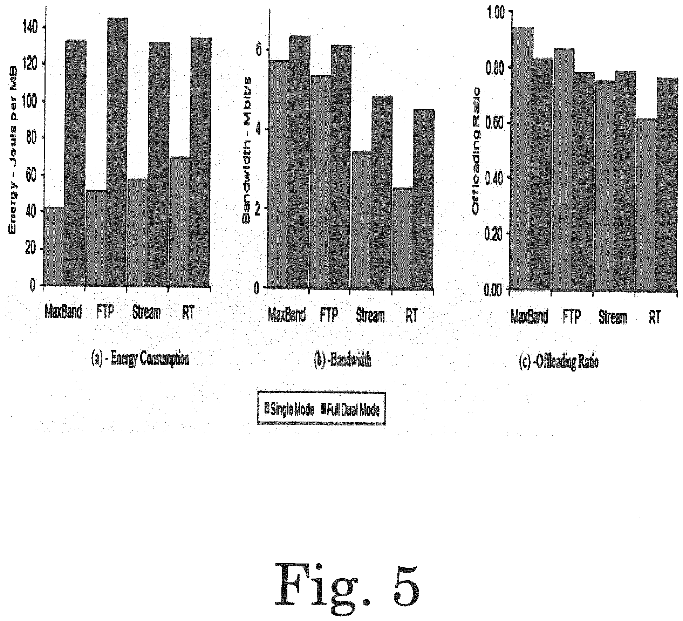

In this example the MaxBand, FTP, RT and Stream policies were evaluated while using the *Full Dual Mode for maximizing bandwidth Performances*. The primary measures for each policy are presented in Fig. 5. As can be observed applying the *Full Dual Mode* improved the bandwidth of all policies between 11% and 77% compared to the single network mode. The bandwidth improvement level was higher using policies with low offloading ratio in the single network. However, the bandwidth improvement has a significant cost considering the energy consumption (The overhead is between two and three times compared to the single network mode). Since the traffic was balanced between the two networks according to their bandwidths, the offloading ratio is almost identical for all polices - around 80%. With faster cellular networks coming soon the benefit from this operation will be more significant in the near future.

Example 4

In this example the FTP, RT and Stream policies were evaluated while using the *Full Dual Mode for maximizing session level QoS*. In this example all the six of primary/secondary combinations of the three policies were evaluated. The relevant QoS measures of each policy were compared by four perspectives: *Single Mode-Active* - the performance using the single network mode while this policy is active; *Full Dual Mode-Primary* - the performance using the full dual mode while the policy is the primary one; *Full Dual Mode-Secondary* - full dual mode while this policy is secondary; Single *Mode-not Active* - the average performance using the single mode while other policy is active. Table III summarizes the results from this experiment.

Table III - *Full Dual Mode for maximizing session level Qos* results

| Policy | Measure | Single Mode-Active | Full Dual Mode-Primary | Full Dual Mode-Secondary | Single Mode-not Active |
|--------|---------|--------------------|------------------------|--------------------------|------------------------|
| FTP | Bandwidth | 5.34 | 5.43 | **4.48** | 2.59 |
| | PER | 0.66 | 0.66 | **0.74** | 0.89 |
| Stream | Jitter | 3.33 | 3.28 | **4.09** | 6.32 |
| | Delay | 35.79 | 35.27 | **36.30** | 37.77 |
| | Bandwidth | 3.43 | 3.43 | 3.29 | **3.94** |
| RT | Jitter | 4.32 | 4.14 | **4.50** | 5.82 |
| | Delay | 27.68 | 26.99 | **31.61** | 41.82 |

There were almost no differences in the performances between the single and full dual mode when the policy is defined as the primary one. However, in most cases there is a significant difference when comparing the performances of a given policy, when it's not the active/primary. For example, the average jitter of a streaming application when using the full dual mode (with streaming as a secondary policy) is 4.09 ms, while in single network mode (with an active policy other than streaming) the average is 6.32ms. Except for the bandwidth measure of the streaming application, the *Full Dual Mode* improves the network QoS measures between 16.5% and 73%. Considering the energy consumption, it was noticed that this full dual mode variant is more efficient than the previous one, with 104.4 joules for 1MB of data. These results indicate that *the Full Dual Mode* can optimize the network performances of two policies simultaneously, and by doing so provide for each running application an optimized network selection.

Although embodiments of the invention have been described by way of illustration, it will be understood that the invention may be carried out with many variations, modifications, and adaptations, without exceeding the scope of the claims.

**Claims**

1.  A network selection and offloading system for mobile devices comprising:

   a) a network switching engine, comprising components adapted to switch between a single network mode and a full dual network mode;
   b) a monitoring engine, comprising components adapted to collect both the network features and device features for network selection;
   c) a network selection (NS) decision model, comprising components adapted to carry out policies, algorithms and protocols for network selection; and
   d) a network selection and traffic offloading (NeSTO) manager, comprising components adapted to activate the required processes for network selection;

   wherein,

   A. in the single network mode the network switching engine enables:

      i. connection to one cellular network;
      ii. connection to one WiFi network;
      iii. switching from a first cellular network to a second cellular network;
      iv. switching from a first WiFi network to a second WiFi network;
      v. switching from a cellular network interface to a WiFi network interface;
      vi. switching from a WiFi network interface to a Cellular network interface; and

   B. in the full dual network mode the network switching engine enables:

      i. simultaneous connection to one cellular network and to one WiFi network;
      ii. switching from a first cellular network to a second cellular network;
      iii. switching from a first WiFi network to a second WiFi network;

iv. switching from a cellular network interface to a WiFi network interface by routing all new sessions to start via the WiFi network interface and allowing all old sessions to run via the cellular network interface until they end normally or a predetermined time out period expires after which the cellular network interface is shut down;

v. switching from a WiFi network interface to a Cellular network interface by routing all new sessions to start via the Cellular network interface and allowing all old sessions to run via the WiFi network interface until they end normally or a predetermined time out period expires after which the WiFi network interface is shut down;

C. the system is implemented in software running on a mobile device using an Android operating system; wherein

I. in the single network mode the switching processes are enabled by the network switching engine using the following switching protocols:

a. to switch from a cellular network interface to a WiFi network interface:

i) route all new sessions to start via the WiFi network interface;
ii) allow all old sessions to run via the cellular network interface until they end normally or a predetermined time out period expires;
iii) after which shut down the cellular network interface;

b. to switch from a WiFi network interface to a cellular network interface:

i) route all new sessions to start via the cellular network interface;
ii) allow all old sessions to run via the WiFi network interface until they end normally or a predetermined time out period expires; after which
iii) shut down the WiFi network interface;

c. to switch from a first cellular network to a second cellular network:

i) route all new sessions to start via the WiFi network interface;
ii) allow all old sessions to run via the cellular network interface until they end normally or a predetermined time out period expires;
iii) after which shut down the cellular network interface;
iv) route all new sessions to start via the cellular network interface;
v) allow all old sessions to run via the WiFi network interface until they end normally or a predetermined time out period expires; after which
vi) shut down the WiFi network interface; and

d. to switch from a first WiFi network to a second WiFi network:

i) route all new sessions to start via the cellular network interface;
ii) allow all old sessions to run via the WiFi network interface until they end normally or a predetermined time out period expires; after which
iii) shut down the WiFi network interface;
iv) route all new sessions to start via the WiFi network interface;
v) allow all old sessions to run via the cellular network interface until they end normally or a predetermined time out period expires;
vi) after which shut down the cellular network interface; and

II. all switching processes 'A.i' to 'A.vi', 'B.i' to 'B.v', and 'a' to 'd' are enabled by the network switching engine using only one WiFi modem and only one cellular modem.

2. The system according to Claim 1, wherein the network switching engine, comprises:

a) a Connectivity Manager, adapted to implement the network switching and route between the available network interfaces; and

b) a Virtual IP Manager, adapted to allow the system to be connected to two different network interfaces simultaneously and to dynamically distribute the sessions between them.

3. The system according to Claim 1 or Claim 2, wherein the monitoring engine comprises:

a) a Network Monitor, adapted to monitor which networks are available;
b) a Network Quality of Service (QoS) Estimator, adapted to estimate the QoS measures of a network; and
c) a Device Bytes Monitor, adapted to monitor the amount of received and sent bytes, the amount of active sessions and capacity of the battery.

4. The system according to any one of Claims 1 to 3, wherein the network selection (NS) decision model comprises:

a) a Policy Repository, adapted to contain all network selection policies;
b) a Core Decision Protocol unit, adapted for network ranking and selection; and
c) a Supporting Models unit, adapted to provide global services for the different core decision protocols.

5. The system according to any one of Claims 1 to 4, wherein the network selection and traffic offloading (NeSTO) manager comprises:

a) a Policy Selector, adapted to assign the required policy; and
b) a Switching Controller, adapted to activate all required processes for network selection.

6. The system according to any one of Claims 1 to 5, wherein the system evaluates several WiFi networks and proceeds to choose the most suitable one, according to a predetermined policy for each running mobile application.

7. The system according to any one of Claims 1 to 6, wherein the system evaluates several cellular networks and proceeds to choose the most suitable one, according to a predetermined policy for each running mobile application.

8. The system according to any one of Claims 1 to 7, wherein a connection to both cellular and WiFi networks occurs simultaneously while selecting the best network according to a predetermined policy for each running mobile application.

9. The system according to any one of Claims 1 to 8, wherein the system may switch to singular or dual network connection, according to a predetermined policy for each running mobile application.

10. The system according to any one of Claims 1 to 9, wherein the system chooses a mobile network with consideration to the load on the cellular network.

11. A wireless mobile device modified by addition of the system according to any one of Claims 1 to 10, to enable all of the following:

(a) connection to one cellular network;
(b) connection to one WiFi network;
(c) simultaneous connection to one cellular network and one WiFi network.

**Patentansprüche**

1. Netzwerkauswahl- und Entlastung-System für mobile Vorrichtungen, umfassend:

a) eine Netzwerk-Schaltung-Maschine, die Komponenten umfasst, die adaptiert sind, zwischen einem Einzel-Netzwerkmodus und einem Voll-Dual-Netzwerkmodus zu schalten;
b) eine Überwachungsmaschine, die Komponenten umfasst, die adaptiert sind, sowohl die Netzwerkmerkmale als auch die Vorrichtungsmerkmale für eine Netzwerkauswahl zu sammeln;
c) ein Netzwerkauswahl (NS)-Entscheidungsmodell, das Komponenten umfasst, die adaptiert sind, Richtlinien, Algorithmen und Protokolle für eine Netzwerkauswahl auszuführen; und
d) einen Netzwerkauswahl- und Verkehrsentlastung (NeSTO)-Manager, der Komponenten umfasst, die adaptiert sind, die erforderlichen Prozesse für eine Netzwerkauswahl zu aktivieren;

wobei

A. die Netzwerk-Schaltung-Maschine in dem Einzel-Netzwerkmodus ermöglicht:

i. Verbindung mit einem zellularen Netzwerk;
ii. Verbindung mit einem WiFi-Netzwerk;
iii. Schalten von einem ersten zellularen Netzwerk zu einem zweiten zellularen Netzwerk;
iv. Schalten von einem ersten WiFi-Netzwerk zu einem zweiten WiFi-Netzwerk;
v. Schalten von einer zellulares Netzwerk-Schnittstelle zu einer WiFi-Netzwerkschnittstelle;
vi. Schalten von einer WiFi-Netzwerkschnittstelle zu einer zellulares Netzwerk-Schnittstelle; und

B. die Netzwerk-Schaltung-Maschine in dem Voll-Dual-Netzwerkmodus ermöglicht:

i. simultane Verbindung mit einem zellularen Netzwerk und mit einem WiFi-Netzwerk;
ii. Schalten von einem ersten zellularen Netzwerk zu einem zweiten zellularen Netzwerk;
iii. Schalten von einem ersten WiFi-Netzwerk zu einem zweiten WiFi-Netzwerk;
iv. Schalten von einer zellulares Netzwerk-Schnittstelle zu einer WiFi-Netzwerkschnittstelle durch Leiten aller neuen Sitzungen, um über die WiFi-Netzwerkschnittstelle zu starten und Ermöglichen allen alten Sitzungen, über die zellulares Netzwerk-Schnittstelle zu laufen, bis sie normal enden oder eine vorbestimmte Zeitablauf-Periode abläuft, nach der die zellulares Netzwerk-Schnittstelle abgeschaltet wird;
v. Schalten von einer WiFi-Netzwerkschnittstelle zu einer zellulares Netzwerk-Schnittstelle durch Leiten aller neuen Sitzungen, um über die zellulares Netzwerk-Schnittstelle zu starten und Ermöglichen allen alten Sitzungen, über die WiFi-Netzwerkschnittstelle zu laufen, bis sie normal enden oder eine vorbestimmte Zeitablauf-Periode abläuft, nach der die WiFi-Netzwerkschnittstelle abgeschaltet wird;

C. das System in Software implementiert ist, die auf einer mobilen Vorrichtung unter Verwendung eines Android-Betriebssystems läuft;

wobei

I. in dem Einzel-Netzwerkmodus die Schaltungsprozesse durch die Netzwerk-Schaltung-Maschine unter Verwendung der folgenden Schaltungsprotokolle ermöglicht werden:

a. um von einer zellulares Netzwerk-Schnittstelle zu einer WiFi-Netzwerkschnittstelle zu schalten: i) leite alle neuen Sitzungen, um über die WiFi-Netzwerkschnittstelle zu starten; ii) ermögliche allen alten Sitzungen, über die zellulares Netzwerk-Schnittstelle zu laufen, bis sie normal enden oder eine vorbestimmte Zeitablauf-Periode abläuft; iii) danach schalte die zellulares Netzwerk-Schnittstelle ab;
b. um von einer WiFi-Netzwerkschnittstelle zu einer zellulares Netzwerk-Schnittstelle zu schalten: i) leite alle neuen Sitzungen, um über die zellulares Netzwerk-Schnittstelle zu starten; ii) ermögliche allen alten Sitzungen, über die WiFi-Netzwerkschnittstelle zu laufen, bis sie normal enden oder eine vorbestimmte Zeitablauf-Periode abläuft; danach iii) schalte die WiFi-Netzwerkschnittstelle ab;
c. um von einem ersten zellularen Netzwerk zu einem zweiten zellularen Netzwerk zu schalten: i) leite alle neuen Sitzungen, um über die WiFi-Netzwerkschnittstelle zu starten; ii) ermögliche allen alten Sitzungen, über die zellulares Netzwerk-Schnittstelle zu laufen, bis sie normal enden oder eine vorbestimmte Zeitablauf-Periode abläuft; iii) danach schalte die zellulares Netzwerk-Schnittstelle ab; iv) leite alle neuen Sitzungen, um über die zellulares Netzwerk-Schnittstelle zu starten; v) ermögliche allen alten Sitzungen, über die WiFi-Netzwerkschnittstelle zu laufen, bis sie normal enden oder eine vorbestimmte Zeitablauf-Periode abläuft; danach vi) schalte die WiFi-Netzwerkschnittstelle ab; und
d. um von einem ersten WiFi-Netzwerk zu einem zweiten WiFi-Netzwerk zu schalten: i) leite alle neuen Sitzungen, um über die zellulares Netzwerk-Schnittstelle zu starten; ii) ermögliche allen alten Sitzungen, über die WiFi-Netzwerkschnittstelle zu laufen, bis sie normal enden oder eine vorbestimmte Zeitablauf-Periode abläuft; danach iii) schalte die WiFi-Netzwerkschnittstelle ab; iv) leite alle neuen Sitzungen, um über die WiFi-Netzwerkschnittstelle zu starten; v) ermögliche allen alten Sitzungen, über die zellulares Netzwerk-Schnittstelle zu laufen, bis sie normal enden oder eine vorbestimmte Zeitablauf-Periode abläuft; vi) danach schalte die zellulares Netzwerk-Schnittstelle ab; und

II. alle Schaltungsprozesse 'A.i' bis 'A.vi', 'B.i' bis 'B.v', und 'a' bis 'd' durch die Netzwerk-Schaltung-Maschine unter Verwendung von nur einem WiFi-Modem und nur einem zellularen Modem ermöglicht werden.

**2.** System nach Anspruch 1, wobei die Netzwerk-Schaltung-Maschine umfasst:

a) einen Konnektivität-Manager, der adaptiert ist, das Netzwerkschalten zu implementieren und zwischen den verfügbaren Netzwerkschnittstellen zu leiten; und
b) einen Virtuell-IP-Manager, der adaptiert ist, dem System zu ermöglichen, mit zwei verschiedenen Netzwerkschnittstellen simultan verbunden zu sein und die Sitzungen dynamisch zwischen ihnen zu verteilen.

**3.** System nach Anspruch 1 oder Anspruch 2, wobei die Überwachungsmaschine umfasst:

a) einen Netzwerk-Monitor, der adaptiert ist, zu überwachen, welche Netzwerke verfügbar sind;
b) einen Netzwerk-Dienstgüte (QoS)-Schätzer, der adaptiert ist, die QoS-Maßnahmen eines Netzwerks zu schätzen; und
c) einen Vorrichtung-Bytes-Monitor, der adaptiert ist, die Menge an empfangenen und gesendeten Bytes, die Menge an aktiven Sitzungen und die Kapazität der Batterie zu überwachen.

**4.** System nach einem der Ansprüche 1 bis 3, wobei das Netzwerkauswahl (NS)-Entscheidungsmodell umfasst:

a) eine Richtlinienablage, die adaptiert ist, alle Netzwerkauswahl-Richtlinien zu enthalten;
b) eine Kernentscheidungsprotokoll-Einheit, die für Netzwerkeinordnen und -auswahl adaptiert ist; und
c) eine Unterstützungsmodelle-Einheit, die adaptiert ist, globale Dienstleistungen für die verschiedenen Kernentscheidungsprotokolle bereitzustellen.

**5.** System nach einem der Ansprüche 1 bis 4, wobei der Netzwerkauswahl- und Verkehrsentlastung (NeSTO)-Manager umfasst:

a) einen Richtlinien-Selektor, der adaptiert ist, die erforderliche Richtlinie zuzuordnen; und
b) eine Schaltungssteuereinrichtung, die adaptiert ist, alle erforderlichen Prozesse für eine Netzwerkauswahl zu aktivieren.

**6.** System nach einem der Ansprüche 1 bis 5, wobei das System mehrere WiFi-Netzwerke evaluiert und verfährt, das am besten geeignetste zu wählen, gemäß einer vorbestimmten Richtlinie für jede laufende mobile Anwendung.

**7.** System nach einem der Ansprüche 1 bis 6, wobei das System mehrere zellulare Netzwerke evaluiert und verfährt, das am besten geeignetste zu wählen, gemäß einer vorbestimmten Richtlinie für jede laufende mobile Anwendung.

**8.** System nach einem der Ansprüche 1 bis 7, wobei eine Verbindung sowohl mit zellularen als auch WiFi-Netzwerken simultan auftritt, während das beste Netzwerk gemäß einer vorbestimmten Richtlinie für jede laufende mobile Anwendung gewählt wird.

**9.** System nach einem der Ansprüche 1 bis 8, wobei das System zu singulärer oder dualer Netzwerkverbindung schalten kann, gemäß einer vorbestimmten Richtlinie für jede laufende mobile Anwendung.

**10.** System nach einem der Ansprüche 1 bis 9, wobei das System ein Mobilfunknetzwerk unter Berücksichtigung der Last auf das zellulare Netzwerk wählt.

**11.** Drahtlose mobile Vorrichtung, die durch Hinzufügung des Systems nach einem der Ansprüche 1 bis 10 modifiziert ist, um alles von dem Folgenden zu ermöglichen:

(a) Verbindung mit einem zellularen Netzwerk;
(b) Verbindung mit einem WiFi-Netzwerk;
(c) simultane Verbindung mit einem zellularen Netzwerk und einem WiFi-Netzwerk.

**Revendications**

**1.** Système de sélection et de délestage de réseau pour dispositifs mobiles comprenant :

a) un moteur de commutation de réseau, comprenant des composants adaptés pour commuter entre un mode réseau unique et un mode réseau double intégral ;

b) un moteur de surveillance, comprenant des composants adaptés pour collecter des caractéristiques de réseau et des caractéristiques de dispositif pour une sélection de réseau ;

c) un modèle de décision de sélection de réseau (NS), comprenant des composants adaptés pour exécuter des politiques, des algorithmes et des protocoles pour une sélection de réseau ; et

d) un gestionnaire de sélection de réseau et de délestage de trafic (NeSTO), comprenant des composants adaptés pour activer les processus requis pour une sélection de réseau ; où,

A. dans le mode réseau unique, le moteur de commutation de réseau permet :

        i. une connexion à un réseau cellulaire ;
        ii. une connexion à un réseau WiFi ;
        iii. une commutation à partir d'un premier réseau cellulaire vers un second réseau cellulaire ;
        iv. une commutation à partir d'un premier réseau WiFi vers un second réseau WiFi ;
        v. une commutation à partir d'une interface de réseau cellulaire vers une interface de réseau WiFi ;
        vi. une commutation à partir d'une interface de réseau WiFi vers une interface de réseau cellulaire ; et

B. dans le mode réseau double intégral, le moteur de commutation de réseau permet :

        i. une connexion simultanée vers un réseau cellulaire et vers un réseau WiFi ;
        ii. une commutation à partir d'un premier réseau cellulaire vers un second réseau cellulaire ;
        iii. une commutation à partir d'un premier réseau WiFi vers un second réseau WiFi ;
        iv. une commutation à partir d'une interface de réseau cellulaire vers une interface de réseau WiFi en routant toutes les nouvelles sessions pour démarrer par l'intermédiaire de l'interface de réseau WiFi, et en permettant à toutes les anciennes sessions de s'exécuter par l'intermédiaire de l'interface de réseau cellulaire jusqu'à ce qu'elles se terminent normalement, ou qu'une période de temps prédéterminée ait expiré, après quoi l'interface de réseau cellulaire est mise hors service ;
        v. une commutation à partir d'une interface de réseau WiFi vers une interface de réseau cellulaire en routant toutes les nouvelles sessions pour démarrer par l'intermédiaire de l'interface de réseau cellulaire, et en permettant à toutes les anciennes sessions de s'exécuter par l'intermédiaire de l'interface de réseau WiFi jusqu'à ce qu'elles se terminent normalement, ou qu'une période de temps prédéterminée ait expiré, après quoi l'interface de réseau WiFi est mise hors service ;

C. le système est mis en en œuvre grâce à un logiciel fonctionnant sur un dispositif mobile utilisant un système d'exploitation Android ; où

I. dans le mode réseau unique, les processus de commutation sont activés par le moteur de commutation de réseau en utilisant les protocoles de commutation suivants :

        a. commuter à partir d'une interface de réseau cellulaire vers une interface de réseau WiFi ;

                i) router toutes les nouvelles sessions pour démarrer par l'intermédiaire de l'interface de réseau WiFi ;
                ii) permettre à toutes les anciennes sessions de s'exécuter par l'intermédiaire de l'interface de réseau cellulaire jusqu'à ce qu'elles se terminent normalement, ou qu'une période de temps prédéterminée ait expiré ;
                iii) après quoi, mettre hors service l'interface de réseau cellulaire ;

        b. commuter à partir d'une interface de réseau Wi-Fi vers une interface de réseau cellulaire ;

                i) router toutes les nouvelles sessions pour démarrer par l'intermédiaire de l'interface de réseau cellulaire ;
                ii) permettre à toutes les anciennes sessions de s'exécuter par l'intermédiaire de l'interface de réseau Wi-Fi jusqu'à ce qu'elles se terminent normalement, ou qu'une période de temps prédéterminée ait expiré ; après quoi,
                iii) mettre hors service l'interface de réseau Wi-Fi ;

        c. commuter à partir d'un premier réseau cellulaire vers un second réseau cellulaire ;

                i) router toutes les nouvelles sessions pour démarrer par l'intermédiaire de l'interface de réseau WiFi ;
                ii) permettre à toutes les anciennes sessions de s'exécuter par l'intermédiaire de l'interface de réseau cellulaire jusqu'à ce qu'elles se terminent normalement, ou qu'une période de temps prédéterminée ait expiré ;

iii) après quoi, mettre hors service l'interface de réseau cellulaire ;

iv) router toutes les nouvelles sessions pour démarrer par l'intermédiaire de l'interface de réseau cellulaire ;

v) permettre à toutes les anciennes sessions de s'exécuter par l'intermédiaire de l'interface de réseau Wi-Fi jusqu'à ce qu'elles se terminent normalement, ou qu'une période de temps prédéterminée ait expiré ; après quoi,

vi) mettre hors service l'interface de réseau Wi-Fi ; et

d. commuter à partir d'un premier réseau WiFi vers un second réseau WiFi ;

i) router toutes les nouvelles sessions pour démarrer par l'intermédiaire de l'interface de réseau cellulaire ;

ii) permettre à toutes les anciennes sessions de s'exécuter par l'intermédiaire de l'interface de réseau Wi-Fi jusqu'à ce qu'elles se terminent normalement, ou qu'une période de temps prédéterminée ait expiré ; après quoi,

iii) mettre hors service l'interface de réseau Wi-Fi ;

iv) router toutes les nouvelles sessions pour démarrer par l'intermédiaire de l'interface de réseau Wi-Fi ;

v) permettre à toutes les anciennes sessions de s'exécuter par l'intermédiaire de l'interface de réseau cellulaire jusqu'à ce qu'elles se terminent normalement, ou qu'une période de temps prédéterminée ait expiré ;

vi) après quoi, mettre hors service l'interface de réseau cellulaire ; et

II. tous les processus de commutation « A.i » à « A.vi », « B.i » à « B.v », et « a » à « d », sont activés par le moteur de commutation de réseau en utilisant seulement un modem WiFi et seulement un modem cellulaire.

2. Système selon la revendication 1, où le moteur de commutation de réseau, comprend :

a) un gestionnaire de connectivité, adapté pour mettre en œuvre une commutation de réseau et un chemin entre les interfaces de réseau disponibles ; et

b) un gestionnaire d'IP virtuel, adapté pour permettre de connecter le système à deux interfaces de réseau différentes simultanément, et pour répartir dynamiquement les sessions entre elles.

3. Système selon la revendication 1 ou la revendication 2, où le moteur de surveillance comprend :

a) un dispositif de surveillance de réseau, adapté pour surveiller quels sont les réseaux disponibles ;

b) un estimateur de la qualité de service (QoS) du réseau, adapté pour estimer les mesures de QoS d'un réseau ; et

c) un dispositif de surveillance des octets d'un dispositif, adapté pour surveiller la quantité d'octets reçus et envoyés, la quantité de sessions actives, et la capacité de la batterie.

4. Système selon l'une quelconque des revendications 1 à 3, où le modèle de décision de sélection de réseau (NS) comprend :

a) un dépôt de politiques, adapté pour contenir toutes les politiques de sélection de réseau ;

b) une unité protocole de décision de noyau, adaptée au classement et à la sélection de réseau ; et

c) une unité modèles de supports, adaptée pour fournir des services globaux aux différents protocoles de décision de noyau.

5. Système selon l'une quelconque des revendications 1 à 4, où le gestionnaire de sélection de réseau et de délestage de trafic (NeSTO) comprend :

a) un sélecteur de politique, adapté pour attribuer la politique requise ; et

b) un contrôleur de commutation, adapté pour activer tous les processus requis pour une sélection de réseau.

6. Système selon l'une quelconque des revendications 1 à 5, où le système évalue plusieurs réseaux WiFi, et procède à la sélection du plus approprié, selon une politique prédéterminée pour chaque application mobile en fonctionnement.

7. Système selon l'une quelconque des revendications 1 à 6, où le système évalue plusieurs réseaux cellulaires, et procède à la sélection du plus approprié, selon une politique prédéterminée pour chaque application mobile en fonctionnement.

8. Système selon l'une quelconque des revendications 1 à 7, où une connexion aux réseaux cellulaires et WiFi se produit simultanément tout en sélectionnant le meilleur réseau selon une politique prédéterminée pour chaque application mobile en fonctionnement.

9. Système selon l'une quelconque des revendications 1 à 8, où le système peut commuter selon une connexion de réseau unique ou double, selon une politique prédéterminée pour chaque application mobile en fonctionnement.

10. Système selon l'une quelconque des revendications 1 à 9, où le système sélectionne un réseau mobile en tenant compte de la charge du réseau cellulaire.

11. Dispositif mobile sans fil modifié par l'ajout du système selon l'une quelconque des revendications 1 à 10, pour permettre ce qui suit :

(a) une connexion à un réseau cellulaire ;
(b) une connexion à un réseau WiFi ;
(c) une connexion simultanée à un réseau cellulaire et à un réseau WiFi.

| Management & Monitoring Tools | 6 |

| Logging Services | 5 |

NeSTO Manager 4

Policy Selector

Switching Controller

NS Decision Model 3

Policy Repository

Core Decision Protocol

Supporting Models

Network Switching Engine 1

Virtual IP Manager

Connectivity Manager

Monitoring Engine 2

Device Level

Environment Level

Fig. 1

Fig. 2

(a) - Energy Consumption

(b) - Bandwidth

(c) - Offloading Ratio

(d) - Delay

(e) - Jitter

(f) - PER

# Fig. 3

(a) - Energy Consumption

(b) - Delay

(c) - Jitter

# Fig. 4

(a) - Energy Consumption

(b) - Bandwidth

(c) - Offloading Ratio

☐ Single Mode   ■ Full Dual Mode

# Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011123841 A1

**Non-patent literature cited in the description**

- **S. M. SHAHRIAR NIRJON et al.** *MultiNets: Policy Oriented Real-Time Switching of Wireless Interfaces on Mobile Devices*
- **K. PAHLAVAN et al.** Handoff in hybrid mobile data networks. *IEEE Personal Communications,* 2000, vol. 7 (2), 34-47
- **W. ZHANG.** Handover Decision Using Fuzzy MADM in Heterogeneous Networks. *Proc. of IEEE WCNC'04,* March 2004